# EUROPEAN PATENT APPLICATION

(11) **EP 3 588 278 A1**
(43) Date of publication of application: **01.01.2020**
(21) Application number: 18180121.8
(22) Date of filing: 27.06.2018
(51) Int. Cl.: G06F 8/656, G05B 23/02, G06F 11/30, G06F 8/658

(54) **METHOD FOR COLLECTING OUTPUT DATA RELATED TO UPGRADING AT LEAST ONE SERVICE OF A PLURALITY OF SERVICES PERFORMED ON A TECHNICAL SYSTEM**

(71) Applicant: Siemens Aktiengesellschaft, 80333 München (DE)
(72) Inventor: Cramer, Dieter, 81543 München (DE); Fiege, Ludger, 85567 Grafing (DE); Fröhlich, Joachim, 85614 Kirchseeon (DE); Rothbauer, Stefan, 86156 Augsburg (DE); Stückjürgen, Christoph, 80807 München (DE)

(57) **Abstract**

The invention relates to a computer-implemented method for collecting output data related to upgrading at least one service of a plurality of services (203, 204, 205, 211) performed on a technical system (200), the technical system (200) comprising at least one actuator (210), wherein the plurality of services is adapted to provide an output (209) which controls the at least one actuator (210) in response to an input (202) to the system (200), wherein the computer-implemented method is adapted to deploy at least one updated version of the at least one service (211) on the system (200) while maintaining the previous version of the service (204) on the system (200), wherein the updated version of the at least one service (211) is prevented from controlling the at least one actuator (210) and deploy a test probe module (311) for testing the performance of the at least one updated version of the at least one service (211) on the technical system (200), operate the test probe module (311) on the technical system (200) to test the performance of the at least one updated version of the at least one service (211) on the technical system (200) with respect to predetermined criteria, determine a first performance level of the at least one updated version of the at least one service (211) by checking whether the performance of the at least one updated version of the at least one service (211) complies with the predetermined criteria based on input data provided by the test probe module, determine a second performance level of the at least one updated version of the at least one service (211) by applying at least one further test on the at least one updated version of the at least one service (211), and collect the output data (209) related to the at least one updated version of the at least one service (211), comprising the first performance level, the second performance level, the predetermined criteria, the input data of the test probe module and/or other data related to the method steps. Further, the invention relates to a corresponding computer program product and a corresponding technical system.

## Description

### 1. Technical field

The present invention relates to a computer-implemented method for collecting output data related to upgrading at least one service of a plurality of serbvvices performed on a technical system, a corresponding computer program product and a corresponding technical system.

### 2. Prior art

Technical and software intensive systems provide services to users (human or other systems) and services need to be updated or upgraded during the lifecycle of the system.

In software development there is a trend to update and upgrade smaller parts of the system, that provide services (also called micro services) in shorter cycles, more frequently.

To the degree that a system consists of more and more separately update-/upgradeable parts the number of upgrades increases.

For each update/upgrade, it has to be verified whether it can be used productively in the field (deployed for production use). The following issues are relevant:
It is difficult to determine whether a newly developed version of a service (update/upgrade) is good enough to be accepted or is better than the current service and should be used instead of the already implemented service. The problem is that laboratory tests may not be able to be executed sufficiently close to real world operating conditions or not for long enough to gain the confidence required.

It is not acceptable or too expensive that critical systems are taken out of operation too often or for too long time periods.

For systems that need to operate safely, any change in the system needs to be validated in the field to ensure safe operation in its intended environment.

After performing an upgrade/update, unforeseen problems might occur in the field and then a reversion to the pre-upgrade state (roll back) is desirable. However, in many cases this may not be not be possible to achieve in a fast and non-complex manner or additional downtime of the system may be involved.

Previously the above stated problems have been solved by the following approaches:
The first approach is to take the system out of service for the period which is required to upgrade it. This approach leads to unavailability of the system during the upgrade period.

A second approach is to rely on a secondary system to provide the service for the upgrade period. This approach is expensive, as a secondary system must be provided and maintained that is only used during the upgrade periods and is otherwise not used. If the secondary system is used in parallel during normal operation for increasing system availability, then no redundant system is available during an upgrade.

A third approach relates to safety relevant systems. For safety relevant systems the validation and verification aspects usually are taken care of by extensive testing in a development (laboratory / simulation) environment and by performing change impact analyses to gain confidence that the system will still provide its services safely after the upgrade. However, this approach does not always provide the confidence of the new service's fitness for its intended purpose, since results of tests in a development environment may not be transferred to the operational environment where factors (use/application scenarios) may be relevant that cannot be simulated in the development environment.

To deal with possible problems after an upgrade/update a further possibility is to implement further down times during which the pre-upgrade state can be rebuild. In case a secondary system has been in use during the upgrade, this has the disadvantage that the secondary systems needs to be used for a longer time than previously planned during performance of the roll-back.

It is therefore an objective of the invention to provide a method for collecting output data related to upgrading at least one service of a plurality of services which is efficient and increases the reliability of the upgraded service.

### 3. Summary of the invention

This problem is according to one aspect of the invention solved by a computer-implemented method for collecting output data related to upgrading at least one service of a plurality of services performed on a technical system, the technical system comprising at least one actuator, wherein the plurality of services is adapted to provide an output which controls the at least one actuator in response to an input to the system, wherein the computer-implemented method is adapted to
a. deploy at least one updated version of the at least one service on the system while maintaining the previous version of the service on the system, wherein the updated version of the at least one service is prevented from controlling the at least one actuator and deploy a test probe module for testing the performance of the at least one updated version of the at least one service on the technical system,
b. operate the test probe module on the technical system to test the performance of the at least one updated version of the at least one service on the technical system with respect to predetermined criteria,
c. determine a first performance level of the at least one updated version of the at least one service by checking whether the performance of the at least one updated version of the at least one service complies with the predetermined criteria based on input data provided by the test probe module,
d. determine a second performance level of the at least one updated version of the at least one service by applying at least one further test on the at least one updated version of the at least one service,
e. collect the output data related to the at least one updated version of the at least one service, comprising the first performance level, the second performance level, the predetermined criteria, the input data of the test probe module and/or other data related to the method steps.

The invention is directed to a method for collecting output data related to upgrading at least one service of a plurality of services.

The performance of the updated version of the service on the technical system is tested with respect to predetermined criteria by a test probe module. The term "update" can be equally referred to as "upgrade", as mentioned above. In other words, the test is important to ensure that the updated service meets the predetermined criteria or requirements, such as e.g. system requirements of the technical system. A first performance level is determined based on this test. Moreover, one or more further tests are applied on the updated version of the service. A second performance level is determined based on this further test.

The method has the advantage that an updated version of a service can be tested in the field while preventing that the updated version will have any influence on the physical world, even in an environment where potentially errors could cause harm. The plurality of tests or multistep testing ensures the reliability of the performance levels and thus the overall performance of the updated version. Thereby, the service is updated and tested in a reliable and efficient manner without interfering the underlying technical system.

Moreover, the output data related to the updated version of the service is collected, comprising the input and/or output data of the method steps. Accordingly, the term "output data" can be equally referred to as "test results". In other words, the last step is directed to logging or documenting the test results. The output data is advantageously available for further method steps, including data analysis. The method has the advantage that an evidence base can be extended.

In one aspect the method is further adapted to
- disable the control of the previous service for the at least one actuator, and
- enable the control of the deployed updated version for the at least one actuator.
Accordingly, the output of the previous service is prevented from controlling or influencing the action of the actuator. The output of the updated version is released for controlling the action of the actuator. In more detail, referring to the above, the updated version passes the aforementioned tests and has sufficient performance levels. Thus, the updated version is successfully upgraded and can be released for control for the at least one actuator.

In another aspect the previous service is maintained in the technical system as a fallback. Accordingly, the previous service serves as backup or replacement service. This has the advantage that after enabling the updated version of the service and encountering any issues with the updated version of the service at a later time point the system can be easily rolled back to the previous version of the service.

In another aspect the predetermined criteria relate to operation limits of the technical system, including time limit of system downtime, an acceptable impact on availability, or/and an acceptable risk of failure. Accordingly, distinct criteria, requirements or conditions can be used for testing the updated version of the service allowing for distinct testing scenarios.

In another aspect the test probe module can provide and/or manipulate the input data, receive data from a sensor proxy, a control logic and an actuator proxy module of the service. Accordingly, these features specify advantageous configuration of the test probe module.

In another aspect the at least one further test is selected from the group, comprising:
determine that the at least one updated version of the at least one service complies with at least one invariant, test the at least one updated version of the at least one service in the technical system with at least one condition, and
compare the at least one updated version of the at least one service with a certified version of the at least one service. Accordingly, these features specify the one or more further tests allowing for distinct testing scenarios.

In another aspect the method is further adapted to
- store the resulting output data in a storage unit, and/or
- analyse the resulting output data.
Accordingly, the resulting output data or test results can be further handled, including e.g. storing and processing steps. These steps can be performed by one or more units of the technical system or separate components.

Further, the invention is directed to a computer program product directly loadable into internal memory of a computer, comprising software code portions for performing the steps of the aforementioned method when said computer program product is running on a computer.

Further, the invention is directed to a corresponding technical system for collecting output data related to upgrading at least one service of a plurality of services performed on a technical system.

### 4. Short description of the drawings

In the following detailed description, presently preferred embodiments of the invention are further described with reference to the following figures:
- Fig. 1: illustrates a system providing services before system upgrade.
- Fig. 2: illustrates a system where an upgraded service has been implemented in the system, but the outputs of the updated version of the service are prevented from controlling the action of the actuators.
- Fig. 3: illustrates that the updated service also contains the test program.

### 5. Detailed description of preferred embodiments

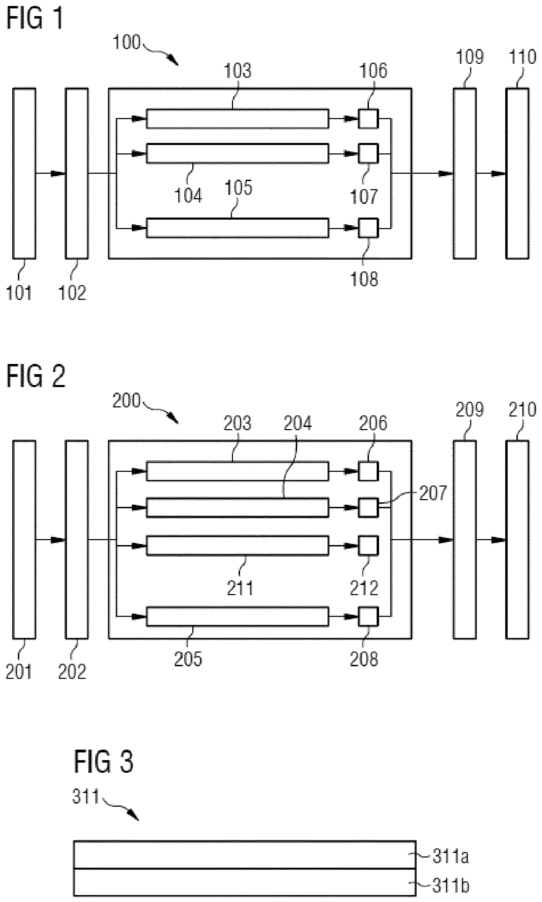

Figure 1 shows a system 100 (e.g. a control system) that receives input 102 (e.g. values of parameters received from sensors) which may be outputted by devices like sensors 101 or other systems providing an output. The system 100 processes this input 102 via the services 103, 104, 105 (aka microservices) being performed on the system 100. Each of the services 103, 104, 105 has a modular structure and performs an individual task and provides respective outputs 106, 107, 108 contributing to the common output 109 of the system 100. The services 103, 104, 105 may also provide the common output 109 directly. The output 109 can serve to control an actuator 110 or the output 109 may be used by another system as input.

Figure 2 shows the system 200 after the employment of an updated version of a service 211 for the service 204. At this stage of the disclosed method, the output 212 of the updated version of the service 211 is prevented from controlling or influencing the action of the actuator, but does already receive the input 202 that the other services 203, 204, 205 of the system 200 receive. A first version (previous version) and a second version (updated version) of a service essentially perform the same function within a system, but contain modifications of the service that may affect their efficiency within the system.

Figure 3 shows that the updated service 311a (211 in Figure 2) is provided with a test probe module 311b which form a unit 311. The functioning of the test probe module 311b is explained in greater detail below. The test probe module 311b is capable of monitoring how the data is processed by the service 311b and thus is provided with data sensors for various modules of the service 311b (e.g. data sensors for a sensor proxy, control logic, and actuator proxy module). The test probe module 311b can also manipulate the data inputted into service 311b by injecting faults into the service 311b and monitor how this manipulated data is processed by the service 311b. Accordingly, this approach has the advantage that a test can be performed in the field free of sideeffects with respect to non-updated service 204 and other services running on the entire system.

The system 200 comprises a collecting unit (not shown) . The collecting unit is adapted to collect the output data 209 related to the at least one updated version of the at least one service 211, comprising the first performance level, the second performance level, the predetermined criteria, the input data of the test probe module and/or other data related to the method steps. The collecting unit can also store the collected data permanently or non-permanently. The collected data can be stored in a volatile or non-volatile memory of the collecting unit. Alternatively, the collecting unit sends the collected data to a separate storage unit. Moreover, the system 200 can comprise additional units, e.g. an analysing unit for analysis of the collected data.

Thus, the steps of analyzing, collecting and/or storing can also be combined. For example, the data can be collected and stored depending on a previous data analysis. Accordingly, the data is analysed and afterwards stored.

## Claims

1. Computer-implemented method for collecting output data related to upgrading at least one service of a plurality of services (203, 204, 205, 211) performed on a technical system (200), the technical system (200) comprising at least one actuator (210), wherein the plurality of services is adapted to provide an output (209) which controls the at least one actuator (210) in response to an input (202) to the system (200), wherein the computer-implemented method is adapted to
a. deploy at least one updated version of the at least one service (211) on the system (200) while maintaining the previous version of the service (204) on the system (200), wherein the updated version of the at least one service (211) is prevented from controlling the at least one actuator (210) and deploy a test probe module (311) for testing the performance of the at least one updated version of the at least one service (211) on the technical system (200),
b. operate the test probe module (311) on the technical system (200) to test the performance of the at least one updated version of the at least one service (211) on the technical system (200) with respect to predetermined criteria,
c. determine a first performance level of the at least one updated version of the at least one service (211) by checking whether the performance of the at least one updated version of the at least one service (211) complies with the predetermined criteria based on input data provided by the test probe module,
d. determine a second performance level of the at least one updated version of the at least one service (211) by applying at least one further test on the at least one updated version of the at least one service (211), and
e. collect the output data (209) related to the at least one updated version of the at least one service (211), comprising the first performance level, the second performance level, the predetermined criteria, the input data of the test probe module and/or other data related to the method steps.

2. Computer-implemented method according to claim 1, wherein the method is further adapted to
- disable the control of the previous service (204) for the at least one actuator (210), and
- enable the control of the deployed updated version (212) for the at least one actuator (210).

3. Computer-implemented method according to claim 1 or claim 2, wherein the previous service (204) is maintained in the technical system (200) as a fallback.

4. Computer-implemented method according to any of the preceding claims, wherein the predetermined criteria relate to operation limits of the technical system (200), including time limit of system (200) downtime, an acceptable impact on availability, or/and an acceptable risk of failure.

5. Computer-implemented method according to any of the preceding claims, wherein the test probe module (311) can provide and/or manipulate the input data, receive data from a sensor proxy, a control logic and an actuator (210) proxy module of the service.

6. Computer-implemented method according to any of the preceding claims, wherein the at least one further test is selected from the group, comprising:
determine that the at least one updated version of the at least one service (211) complies with at least one invariant,
test the at least one updated version of the at least one service (211) in the technical system with at least one condition, and
compare the at least one updated version of the at least one service (211) with a certified version of the at least one service.

7. Computer-implemented method according to any of the preceding claims, wherein the method is further adapted to
- store the resulting output data (209) in a storage unit, and/or
- analyse the resulting output data (209).

8. A computer program product directly loadable into an internal memory of a computer, comprising software code portions for performing the steps according to any one of the preceding claims when said computer program product is running on a computer.

9. Technical system for collecting output data related to upgrading at least one service of a plurality of services (203, 204, 205, 211) performed on a technical system (200) according to any of the preceding claims.
